# FASCICULE DE BREVET EUROPEEN

(11) **EP 1 364 891 B1**
(45) Date de publication et mention de la délivrance du brevet: **11.04.2007**
(21) Numéro de dépôt: 03350002.6
(22) Date de dépôt: 19.05.2003
(51) Int. Cl.: B65D 88/70, F16K 31/383

(54) **Dispositif de décharge brusque d'air avec conduite d'éjection améliorée**
Belüftungsvorrichtung durch plötzliches Ablassen von Druckluft mit einem verbesserten Auswerferrohr
Device for aeration by sudden discharge of compressed air with improved ejection duct

(30) Priorité: 24.05.2002 FR 0206369
(43) Date de publication de la demande: 26.11.2003
(73) Titulaire: Simoens, Hervé, 59700 Marcq en Baroeul (FR)
(72) Inventeur: Simoens, Hervé, 59700 Marcq en Baroeul (FR)
(74) Mandataire: Tournel, Jean Louis

(56) Documents cités:
- WO-A-97/43195
- DE-B- 1 259 160
- FR-A- 2 429 952
- FR-A- 2 660 394
- GB-A- 2 067 269
- GB-A- 2 226 429
- US-A- 4 201 362

## Description

L'invention se rapporte à un dispositif de décharge brusque d'air avec conduite d'éjection améliorée.

Dans différentes applications, il est nécessaire de supprimer les accumulations de matières qui nuisent au bon fonctionnement de l'installation.

Tel est le cas des cimenteries ou des silos à pondéreux qui se vident par gravité.

Pour ce faire, au lieu d'utiliser des moyens purement mécaniques du type barre métallique manipulée par un individu, il est connu d'utiliser des dispositifs de décharge brusque d'air.

Le principe de ces dispositifs consiste à remplir une réserve ou capacité d'air à une pression donnée et de laisser s'échapper brusquement l'air pour produire une déflagration.

Sous l'effet de la déflagration, les accumulations de matières sont désagrégées.

L'avantage de ces dispositifs consiste dans le fait qu'ils peuvent fonctionner en automatique et être disposés en des endroits peu accessibles.

Les dispositifs connus comprennent donc un dispositif de contrôle de l'écoulement d'un fluide gazeux établi sur un parcours reliant l'accumulateur de fluide gazeux et, éventuellement, une tuyère d'éjection .

Ainsi, classiquement, le dispositif de décharge comprend un corps logeant un piston dont la face avant ferme un orifice dit de sortie qui débouche dans une conduite de sortie, ce corps présentant une conduite d'entrée qui la relie à la réserve ou capacité.

Regarder par exemple les documents FR-A-2429952 et WO-A-97/43195.

Pendant toute la période de remplissage de la capacité, la face arrière de ce piston est soumise à une pression maintenant le piston sur l'orifice de sortie.

Lorsque l'on relâche la pression maintenant la pression sur le piston, ce dernier recule brutalement et laisse le fluide passer de la capacité vers la conduite de sortie intégrant ou non une tuyère.

Sur les dispositifs connus à ce jour, la conduite de sortie a une section constante au long de son axe longitudinal identique à l'orifice de communication entre la capacité et le corps du dispositif.

Par contre, bien souvent, la géométrie de la conduite de sortie est différente au long de l'axe à savoir qu'au niveau de la zone d'application du piston, la section de la conduite de sortie est circulaire pour évoluer parfois vers une ellipse.

L'efficacité de ces dispositifs est directement liée à la vitesse d'évacuation de l'air contenu dans la réserve.

Cette vitesse d'éjection dépend notamment de la vitesse d'ouverture du piston.

C'est ainsi que l'on a imaginé d'alléger le piston.

Pour ce faire, celui-ci se présente alors sous la forme d'une coupelle notamment tronconique dont la face avant convexe ferme l'orifice de sortie et la face arrière concave porte un moyen de guidage avec le corps du dispositif.

Ce moyen de guidage est, de préférence, réduit à un coulisseau se déplaçant dans une coulisse fixée sur l'arrière du corps.

Ceci permet à la fois d'alléger le piston et de réduire les frottements par réduction des surfaces de guidage.

Pour des raisons notamment d'implantation de ces dispositifs de décharge brusque, il est commode que la conduite d'entrée qui relie le dispositif de contrôle de l'écoulement du fluide à la capacité soit sensiblement perpendiculaire à la conduite de sortie.

Cela permet en outre de limiter le parcours entre l'entrée et la sortie.

Au long de son parcours, on constate nécessairement une perte de charge réduisant l'efficacité du dispositif.

On peut certes augmenter l'efficacité de ces dispositifs en augmentant la capacité volumique de la réserve ou en augmentant la pression de l'air contenue dans la réserve mais cela n'est pas toujours possible économiquement ou en raison de l'implantation des dispositifs de décharge.

Un autre problème résulte du bruit produit par l'évacuation de l'air contenu dans la chambre arrière.

Pour réduire le bruit, lors de la vidange de la chambre arrière, il est ainsi connu d'évacuer l'air contenu dans cette chambre directement ou indirectement dans la conduite de sortie.

Pour ce faire, il est connu US-4.201.362 d'équiper la face avant du piston d'une série d'obturateurs disposés les uns derrière les autres.

Un tel montage entraîne alors une augmentation du poids de l'obturateur principal et donc une perte d'efficacité du dispositif.

L'invention se propose d'apporter une solution pour améliorer l'efficacité des systèmes précités.

A cet effet, l'invention a pour objet un dispositif de décharge brusque d'air comprenant un dispositif de contrôle d'écoulement d'air disposé entre une conduite d'entrée destinée à être reliée à une capacité destinée à emmagasiner un volume d'air et une conduite de sortie, ce dispositif de décharge étant caractérisé en ce que l'aire de la section de la conduite de sortie prise en son extrémité distale est supérieure à l'aire de la section de la conduite d'entrée prise en son extrémité située à proximité du dispositif de contrôle de l'écoulement.

L'invention sera bien comprise à l'aide de la description ci-après faite à titre d'exemple non limitatif en regard du dessin ci-annexé qui représente schématiquement :

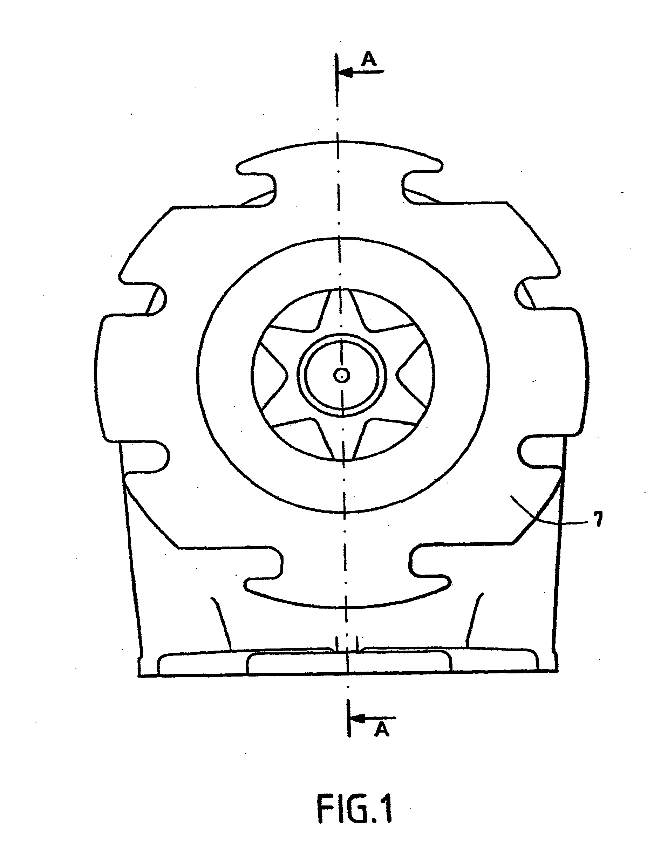

- figure 1 : une vue de l'extrémité d'un dispositif de décharge,
- figure 2 : une vue en coupe selon AA de la figure 1,

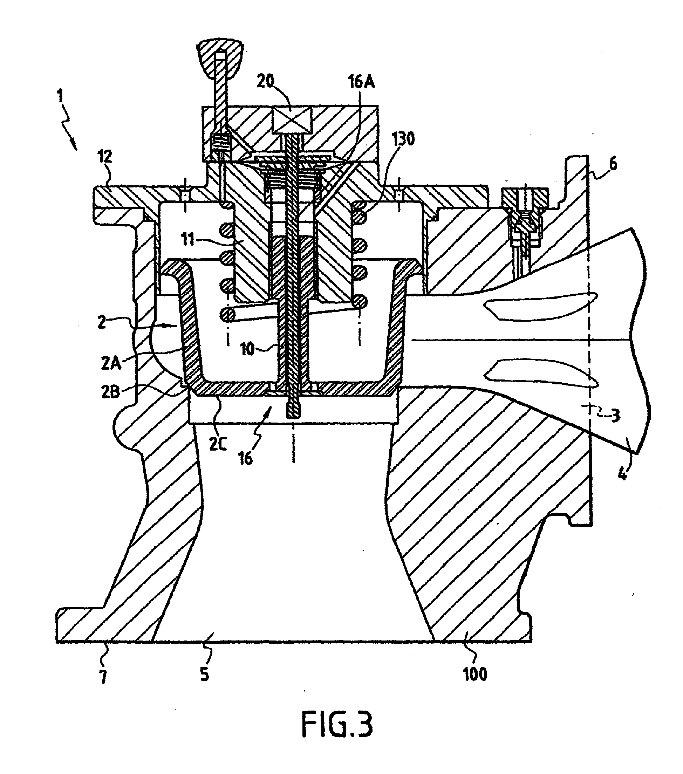

- figure 3 : une variante de réalisation en coupe partielle,
- figures 4 à 6 : différents détails de réalisation.

En se reportant au dessin, on voit un dispositif 1 de décharge brusque d'air comprenant un dispositif 2 de contrôle d'écoulement d'air disposé entre une conduite 3 d'entrée destinée à être reliée à une capacité 4 destinée à accumuler un volume d'air et une conduite 5 de sortie.

Pour la fixation de la capacité sur le dispositif, il est prévu, par exemple, d'équiper la conduite d'entrée du corps du dispositif d'une bride 6.

Une seconde bride 7 est généralement prévue pour le raccordement de la conduite de sortie sur une paroi ou sur une tuyère.

Classiquement, le dispositif 2 de contrôle est constitué par un obturateur 2A qui, appliqué sur un siège 2B, peut s'en écarter pour laisser passer librement l'air provenant de la capacité 4 vers la conduite 5 de sortie qui intègre éventuellement une tuyère, l'ensemble étant toujours appelé conduite de sortie.

Dans l'exemple représenté, l'obturateur principal 2A se présente sous la forme d'un piston ou d'une coupelle tronconique dont la face avant 2C s'appuie sur un siège 2B.

Cette face avant 2C est donc située sur la face convexe de la coupelle.

Ce piston ou coupelle ferme l'entrée de la conduite de sortie.

Comme on peut le voir, la conduite 3 d'entrée débouche latéralement dans le corps 100 du dispositif.

L'obturateur principal est guidé en translation.

A cet effet, dans l'exemple présenté, notamment dans le cas de la forme en coupelle, la face arrière de la coupelle porte un coulisseau 10 qui coopère avec une coulisse 11 présentée par le corps du dispositif.

Cette coulisse est portée par une partie 12 de la paroi du corps du dispositif qui est amovible.

Pour le remplissage de la capacité, une entrée d'air contrôlée débouche :
- soit, dans la chambre arrière 13 du corps du dispositif et le jeu entre la paroi latérale de cette chambre et la coupelle permet d'alimenter en air la capacité,
- soit, dans la conduite d'entrée et c'est toujours le jeu précité qui permet d'alimenter la chambre arrière pour appliquer le piston ou la coupelle.

Une double alimentation à la fois de la chambre arrière et de la capacité est également une solution retenue.

Bien souvent, il est prévu un moyen 130 de rappel de l'obturateur principal en sa position fermée mais cela n'est pas obligatoire.

Un dispositif 14 permet d'évacuer l'air contenu dans la chambre arrière pour permettre de faire reculer la coupelle ou piston.

Selon une caractéristique de l'invention, l'aire C de la section de la conduite de sortie prise en son extrémité distale est supérieure à l'aire A de la section de la conduite d'entrée prise en son extrémité située à proximité du dispositif de contrôle de l'écoulement.

Par extrémité distale, on comprendra l'extrémité de la conduite de sortie la plus éloignée de la coupelle ou piston.

La section C de l'extrémité distale de la conduite de sortie est supérieure à la section B dudit tronçon prise en sa partie proximale.

Avantageusement, la conduite de sortie comprend dans le sens d'évacuation de l'air un tronçon convergent 5A suivi d'un tronçon divergent 5B.

Cette disposition permet d'augmenter la vitesse de l'air au niveau du rétrécissement et donc d'améliorer la déflagration.

Une deuxième disposition prise permet également d'améliorer la déflagration.

Pour que la coupelle notamment tronconique dégage l'accès à la conduite de sortie, il faut évacuer l'air contenu dans la chambre arrière 13 rapidement.

Pour ce faire, classiquement, on équipe le dispositif 14 d'un obturateur 16 dit d'évacuation contrôlant l'écoulement de l'air contenu dans la chambre arrière 13 vers la conduite 5 de sortie.

Lorsque l'air de cette chambre arrière 13 est évacué, la coupelle ou obturateur principal 2A recule vers l'arrière pour dégager le passage.

Selon l'invention, le siège 17 de cet obturateur 16 d'évacuation se situe au niveau de la face avant 2C de la coupelle ou obturateur principal et pour l'évacuation de l'air contenu dans la chambre arrière, l'obturateur 16 se déplace vers l'avant en sens opposé à celui de la coupelle 2A lorsqu'elle quitte son siège.

Cette disposition technique est très avantageuse.

En effet, le bruit induit par la libération de l'air contenu dans la chambre arrière n'est plus perçu et se confond avec la déflagration car il n'est pas envoyé à l'extérieur comme auparavant.

Le deuxième point intéressant consiste dans le fait que le déplacement de l'obturateur vers l'avant élimine à chaque fois les possibles accumulations sur la face avant de la coupelle.

Un troisième intérêt consiste dans le fait que l'obturateur d'évacuation 16 est désaccouplé de la coupelle 2A de sorte que celle-ci est plus légère et peut donc reculer plus rapidement.

Cet obturateur 16 d'évacuation est porté par l'extrémité d'une tige 16A de commande guidée en translation au travers de la coupelle tronconique.

L'extrémité de cette tige 16A de manoeuvre est reliée à un moyen moteur 20 pour induire son déplacement.

Dans une forme de réalisation, le moyen moteur 20 est un dispositif électromécanique qui s'appuie ou entraîne la tige de manoeuvre dans le sens souhaité.

Dans une autre forme de réalisation, ce moyen moteur 20 est une membrane déformable qui, soumise à une pression s'exerçant dans une chambre 21 dite de commande, peut se déplacer pour entraîner la manoeuvre de la tige.

Une chambre 22 située à l'opposé de celle produisant l'ouverture pour l'évacuation de l'air est alimentée en air à la même pression que la chambre arrière pour faciliter le maintien de l'obturateur 16 sur son siège.

La tige 16A de manoeuvre traverse donc la coulisse et le coulisseau.

Un ressort 23 de rappel ramène l'obturateur en position sur son siège.

Ce ressort de rappel est logé dans un alésage que comporte la coulisse.

Comme on peut le voir, cette coulisse est portée par la face arrière du corps du dispositif de décharge brusque.

Pour le transfert de l'air contenu dans la chambre arrière 13 vers l'orifice bordé par le siège de l'obturateur d'évacuation, la coupelle tronconique présente des canaux 25 d'évacuation débouchant dans une chambre 26 dite avant logeant une partie de l'obturateur.

Avantageusement, la partie concave de la coupelle 2A loge une pièce délimitant une cuvette 30 dont la concavité tournée vers l'arrière du corps du dispositif face à la coulisse 11 forme avec la coulisse en position de recul de la coupelle tronconique une chambre 31 dite de compression formant un amortisseur pour le recul de la dite coupelle.

Un ressort de rappel de la coupelle 2A notamment tronconique applique celle-ci sur son siège.

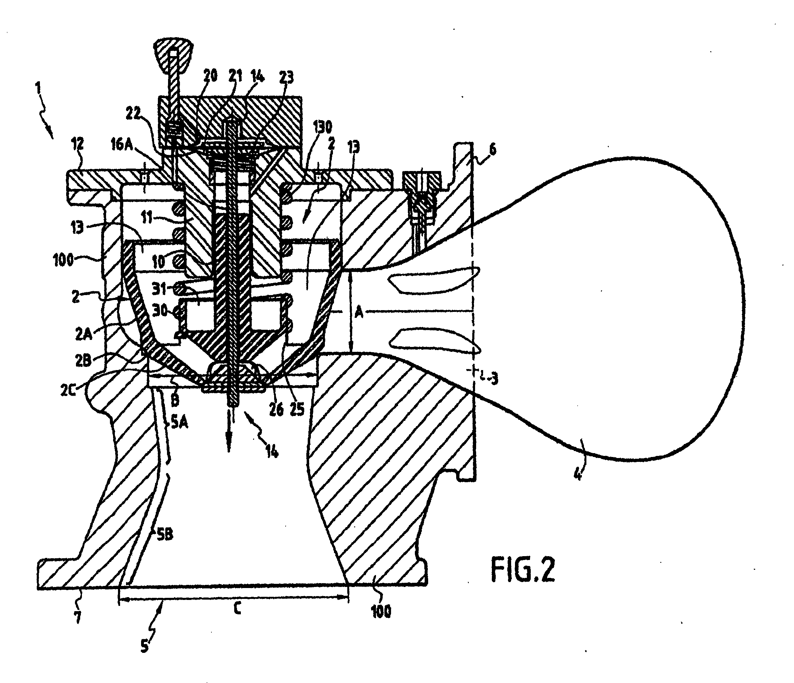

Comme on peut le voir sur la figure 2, la coupelle 2A comporte trois étages.

L'étage arrière est cylindrique de révolution avec un rayon constant au long de l'axe longitudinal.

Les deux autres étages sont également cylindriques de révolution mais le rayon varie au long de l'axe longitudinal en décroissant fortement vers l'avant de la coupelle.

Le siège 2B de la coupelle 2A est usiné dans le corps du dispositif mais, de préférence, ce siège est formé par une bague 120 rapportée dans le corps du dispositif de manière à faciliter l'entretien (figure 5).

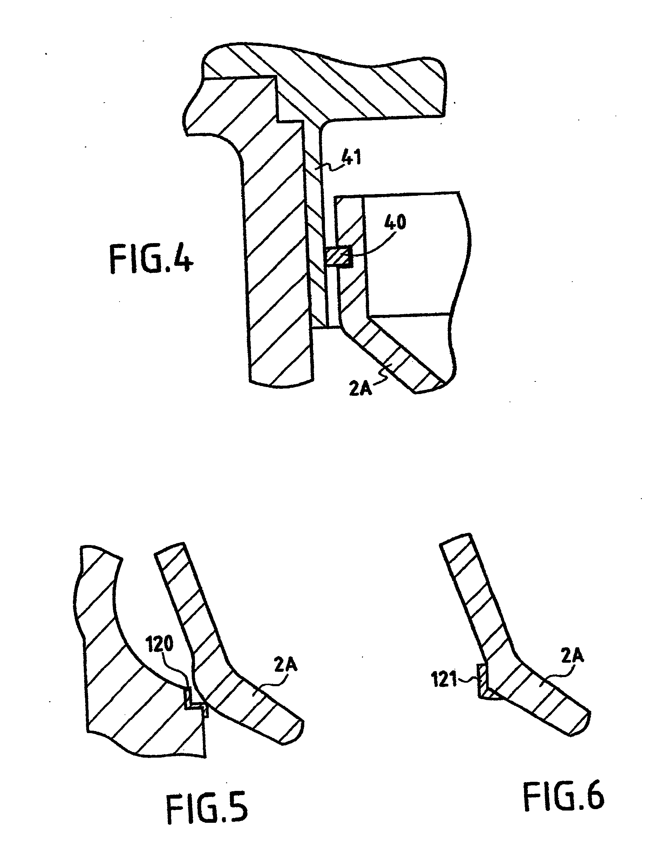

Une autre variante (figure 6) consiste à prévoir une bague 121 rapportée sur la coupelle 2A.

Ces bagues 120 ou 121 sont en matériau moins dur que ceux venant en contact avec la pièce opposée.

Comme on peut le voir à la figure 4, on a prévu sur l'étage arrière un joint 40.

Ce joint qui n'est pas prévu pour assurer une étanchéité parfaite réduit le jeu de fonctionnement à environ deux à trois dixièmes de millimètres.

Le jeu de chaque côté peut alors être plus important, ce qui évite le grippage du piston ou coupelle.

Dans une forme avantageuse (figure 6), au lieu que l'étage arrière de la coupelle 2A coopère avec un faible jeu de fonctionnement avec le corps du dispositif, cet étage arrière coopère avec une chemise 41, cette chemise étant rapportée dans le corps mais de préférence cette chemise est portée par la paroi arrière.

## Revendications

1. Dispositif de décharge brusque d'air disposé entre une conduite (3) d'entrée destinée à être reliée à une capacité destinée à accumuler un volume d'air et une conduite (5) de sortie dont (C) de la section de la conduite de sortie prise en son extrémité distale est supérieure à l'aire (A) de la section de la conduite d'entrée prise en son extrémité située à proximité du dispositif de contr8le de l'écoulement **caractérisé en ce que** la conduite de sortie comprend dans le sens d'évacuation de l'air un tronçon convergent (5A) suivi d'un tronçon divergent (5B).

2. Dispositif de décharge brusque d'air selon la revendication 1 comprenant un obturateur (16) dit d'évacuation contrôlant l'écoulement de l'air contenu dans une chambre arrière vers la conduite de sortie par déplacement d'un piston (2A) en forme de coupelle, **caractérisé en ce que** le siège (17) de cet obturateur (16) d'évacuation se situe au niveau de la face avant (2C) de la coupelle et pour l'évacuation de l'air contenu dans la chambre arrière, l'obturateur (16) se déplace vers l'avant en sens opposé à Celui de la coupelle (2A) lorsqu'elle quitte son siège.

3. Dispositif de décharge brusque d'air selon la revendication 2 **caractérisé en ce que** l'obturateur (16) d'évacuation est Porté par l'extrémité d'une tige (2A) de commande guidée en translation au travers de la coupelle tronconique et l'extrémité de cette tige (16A) de manoeuvre est reliée à un moyen moteur (20) pour induire son déplacement.

4. Dispositif de décharge basque d'air selon la revendication 3 **caractérisé en ce que** le moyen moteur (20) est un dispositif électromécanique qui s'appuie- ou entraîne la tige (16A) de manoeuvre dans le sens souhaité.

5. Dispositif de décharge brusque d'air selon la revendication 3 **caractérisé en ce que** le moyen moteur (20) est une membrane déformable qui, soumise à une pression s'exerçant dans une chambre (21) dite de commande, se déplace pour entraîner la manoeuvre de la tige (16A) de manoeuvre.

6. Dispositif de décharge brusque d'air selon la revendication 3 **caractérisé en ce que** la partie concave de la coupelle (2A) loge une cuvette (30) dont la concavité est tournée vers l'arrière du corps du dispositif face à une coulisse et cette cuvette (30) et la coulisse forment en position de recul de la coupelle une chambre (31) dite de compression formant un amortisseur pour le recul de la dite coupelle.

7. Dispositif de décharge brusque d'air selon la revendication 2 **caractérisé en ce que** le siège (2B) de la coupelle (2A) ou piston (2A) est formé par une bague (120) rapportée dans le corps du dispositif de décharge.

8. Dispositif de décharge brusque d'air selon la revendication 2 **caractérisé en ce qu**'une bague (121) est rapportée sur la coupelle (2A).

## Claims

1. Device for blasting air disposed between an inlet pipe (3) designed to be connected to a container provided as a means of storing a volume of air and an outlet pipe (5), in which the cross-sectional area (C) of the outlet pipe as measured at its distal end is bigger than the cross-sectional area (A) of the inlet pipe as measured at its end disposed close to the flow control device, **characterised in that** the outlet pipe has a converging section (5A) in the direction in which air is evacuated followed by a diverging section (5B).

2. Device for blasting air as claimed in claim 1, comprising what is effectively an evacuation valve (16) controlling the flow of air contained in a rear chamber towards the outlet pipe by displacing a piston (2A) in the shape of a cup, **characterised in that** the seat (17) of this evacuation valve (16) is disposed on a level with the front face (2C) of the cup and in order to evacuate air contained in the rear chamber, the evacuation valve (16) is moved forwards in the direction opposite that of the cup (2A) when it leaves its seat.

3. Device for blasting air as claimed in claim 2, **characterised in that** the evacuation valve (16) is borne by the end of a control rod (2A) guided in translation by means of the frustoconical cup and the end of this control rod (16A) is connected to a drive means (20), causing it to move.

4. Device for blasting air as claimed in claim 3,
**characterised in that** the drive means (20) is an electro-mechanical device, which is supported on or drives the control rod (16A) in the desired direction.

5. Device for blasting air as claimed in claim 3, **characterised in that** the drive means (20) is a deformable membrane which, when subjected to a pressure prevailing in a control chamber (21), is moved in order to drive operation of the control rod (16A).

6. Device for blasting air as claimed in claim 3, **characterised in that** the concave part of the cup (2A) accommodates a trough (30), the concave aspect of which is directed towards the rear of the body of the device facing a slide and this trough (30) and the slide form what is effectively a compression chamber (31) when the cup is in the retracted position, constituting a damper for retracting said cup.

7. Device for blasting air as claimed in claim 2, **characterised in that** the seat (2B) of the cup (2A) or piston (2A) is formed by a ring (120) detachably mounted in the body of the discharge device.

8. Device for blasting air as claimed in claim 2, **characterised in that** a ring (121) is detachably mounted on the cup (2A).

## Patentansprüche

1. Vorrichtung zum schlagartigen Ablassen von Luft, die zwischen einer Einlassleitung (3), die dazu bestimmt ist, mit einem Raum zum Speichern eines Luftvolumens verbunden zu werden, und einer Auslassleitung (5) angeordnet ist, wobei die Querschnittsfläche (C) der Auslassleitung an ihrem distalen Ende größer ist als die Querschnittsfläche (A) der Einlassleitung an ihrem der Strömungssteuervorrichtung nahe liegenden Ende, **dadurch gekennzeichnet, dass** die Auslassleitung in Luftabströmrichtung einen konvergierenden Abschnitt (5A), gefolgt von einem divergierenden Abschnitt (5B) aufweist.

2. Vorrichtung zum schlagartigen Ablassen von Luft nach Anspruch 1, mit einem sogenannten Abströmschließglied (16), welches das Abströmen von in einer hinteren Kammer enthaltener Luft zur Auslassleitung hin durch Verstellung eines tellerförmigen Kolbens (2A) steuert, **dadurch gekennzeichnet, dass** der Sitz (17) dieses Abströmschließglieds (16) im Bereich der Vorderseite (2C) des Tellers liegt und zum Abströmen der in der hinteren Kammer enthaltenen Luft das Schließglied (16) sich nach vorne in entgegen gesetzter Richtung zum Teller (2A) verstellt, wenn er seinen Sitz verlässt.

3. Vorrichtung zum schlagartigen Ablassen von Luft nach Anspruch 2, **dadurch gekennzeichnet, dass** das Abströmschließglied (16) von dem Ende einer Steuerstange (2A) getragen wird, die durch den kegelstumpfförmigen Teller hindurch verschiebbar geführt ist, und das Ende dieser Betätigungsstange (16A) mit einem Antriebsmittel (20) verbunden ist, um ihre Verstellung zu bewirken.

4. Vorrichtung zum schlagartigen Ablassen von Luft nach Anspruch 3, **dadurch gekennzeichnet, dass** das Antriebsmittel (20) eine elektromechanische Vorrichtung ist, welche sich an die Betätigungsstange (16A) abstützt bzw. diese in der gewünschten Richtung mitnimmt.

5. Vorrichtung zum schlagartigen Ablassen von Luft nach Anspruch 3, **dadurch gekennzeichnet, dass** das Antriebsmittel (20) eine verformbare Membran ist, die sich unter einem auf eine sogenannte Steuerkammer (21) ausgeübten Druck verstellt, um die Betätigung der Betätigungsstange (16A) zu bewirken.

6. Vorrichtung zum schlagartigen Ablassen von Luft nach Anspruch 3, **dadurch gekennzeichnet, dass** der konkave Teil des Tellers (2A) eine Schale (30) aufnimmt, die mit ihrer Konkavität der Rückseite des Körpers der Vorrichtung gegenüberliegend einer Kulisse zugewandt ist, und diese Schale (30) und die Kulisse in Rückzugsstellung der Schale eine sogenannte Druckkammer (31) bilden, welche ein Dämpfungsglied für den Rückzug der Schale bildet.

7. Vorrichtung zum schlagartigen Ablassen von Luft nach Anspruch 2, **dadurch gekennzeichnet, dass** der Sitz (2B) des Tellers (2A) bzw. Kolbens (2A) aus einem Ring (120) gebildet ist, der in den Körper der Ablassvorrichtung eingesetzt ist.

8. Vorrichtung zum schlagartigen Ablassen von Luft nach Anspruch 2, **dadurch gekennzeichnet, dass** ein Ring (121) an den Teller (2A) angesetzt ist.
